# EUROPÄISCHE PATENTSCHRIFT

(11) **EP 0 959 396 B1**
(45) Veröffentlichungstag und Bekanntmachung des Hinweises auf die Patenterteilung: **30.07.2008**
(21) Anmeldenummer: 99108888.1
(22) Anmeldetag: 05.05.1999
(51) Int. Cl.: G05B 19/042

(54) **Störungssichere Steuerungsanordnung für ein Hebezeug**
Interference-free control device for a hoist
Dispositif de commande protegé en cas de pertubation pour une installation de levage

(30) Priorität: 18.05.1998 DE 19822288
(43) Veröffentlichungstag der Anmeldung: 24.11.1999
(73) Patentinhaber: R. Stahl Fördertechnik GmbH, 74653 Künzelsau (DE)
(72) Erfinder: Stein, Raimund, 74626 Unterheimbach (DE)
(74) Vertreter: Rüger, Barthelt & Abel Patentanwälte

(56) Entgegenhaltungen:
- DE-A- 3 236 208
- US-A- 4 491 905

## Beschreibung

Wie in allen übrigen technischen Bereichen so steigen auch die Anforderungen an die Leistungsmerkmale von Hebezeugen. Insbesondere gehen die Bestrebungen dahin, ohne Verlust an Sicherheit das Material optimal auszunutzen. Ferner erhöhen sich die Anforderungen an die Flexibilität bzw. die Steuerungsmöglichkeit.

Derart hohe und komplexe Anforderungen lassen sich im Allgemeinen nur dann mit vertretbarem Aufwand erfüllen, wenn Mikroprozessoren zu Hilfe genommen werden. In diesen Mikroprozessoren ist die gesamte Intelligenz zusammengefasst, die benötigt wird, um die komplexen Leistungsanforderungen zu erfüllen. Zu diesen Leistungsanforderungen gehören die Überwachung der Motortemperatur, die Überwachung der Betriebszeit des Hebezeuges, um rechtzeitig Wartungseingriffe vorzunehmen, die Ermittlung der Hakenlast und die Notabschaltung beim Überschreiten der zulässigen Hakenlast und die Motoransteuerung sowie weitere Funktionen.

Ein Beispiel für ein solchermaßen mikroprozessorgesteuertes Hebezeug ist in der DE-C-34 28 215 gezeigt.

Da die Ausgangssteuerleistung von Mikroprozessoren nicht ausreicht, um die Steuer- oder Magnetwicklung der Motorschütze direkt zu betreiben, liegen bei der bekannten Anordnung zwischen den Ausgängen des Mikroprozessors und den Steuerwicklungen der Schütze kleine Hilfsrelais, die eine kleine Steuerleistung erfordern, die von dem Mikroprozessor aufzubringen ist. Die Ruhekontakte dieser zwischengeschalteten Relais beaufschlagen ihrerseits dann die Steuerwicklung des Motorschützes. Dabei ist für die Funktion "Heben", "Senken" sowie "Heben schnell" und "Senken schnell" jeweils ein eigenes Motorschütz mit eigenem Hilfsrelais vorhanden.

Die Eingänge des Mikroprozessors, über die die Fahrbefehle des Hebezeugs eingegeben werden, sind über Steuerleitungen mit den entsprechenden Schaltern im Handsteuerschalter verbunden. Die Schalter oder Taster in dem Handsteuerschalter sind als Arbeitskontakte ausgeführt, d.h. wenn kein Fahrbefehl gegeben wird, sind die Kontakte geöffnet.

Die Praxis hat gezeigt, dass die Steuerleitungen häufig in unmittelbarer Nähe von Stromkabeln verlegt werden müssen. Dies hat zur Folge, dass gelegentlich Störimpulse aus den Stromleitungen in die Steuerleitungen eingekoppelt werden. Die Mikroprozessoreingänge erfordern nur eine extrem kleine Steuerleistung, und weil im Stillstand des Hebezeugs die Schalter am anderen Ende der Steuerleitung offen sind, wirken die einseitig offenen Steuerleitungen wie Antennen. Auf diese Weise können Störimpulse eingestreut werden, die durchaus vom Mikroprozessor als Fahrbefehle verstanden werden, der dann unbeabsichtigt das Hebezeug in Gang setzt.

Außerdem können Programmierfehler oder momentane innere Störungen des Mikroprozessors zu fehlerhaften Fahrbewegungen führen.

Ein ähnliches Problem liegt der Steuerung eines Webstuhls nach der US 4,491,905 zugrunde. Dort ist eine Schaltungsanordnung angegeben, bei der über einen Ausgang eines Mikroprozessors ein Motorschütz für den Antriebsmotor eines Webstuhls angesteuert wird. Der aus dem Mikroprozessor kommende Strom für den Schütz wird über einen Schalterkontakt eines Hilfsrelais geschleift ist. Das Hilfsrelais bekommt seinen Strom ebenfalls aus dem Mikroprozessor und verfügt über einen weiteren Kontaktsatz, um unabhängig von dem Ausgangssignal des Mikroprozessors in Selbsthaltung zu gehen. Damit die Selbsthaltung erzeugt werden kann, ist die Betätigung eines manuellen Tasters erforderlich. Außerdem kann über die Betätigung eines weiteren manuellen Tasters mit Ruhekontakt unabhängig vom Mikroprozessor die Selbsthaltung abgeschaltet und damit der Motor stillgesetzt werden.

Ausgehend hiervon ist es Aufgabe der Erfindung, eine Steuerungsanordnung für Hebezeuge zu schaffen, die störungssicher ist.

Diese Aufgabe wird erfindungsgemäß durch die Steuerungsanordnung mit den Merkmalen des Anspruches 1 gelöst.

Der Mikroprozessor bekommt seine Steuerkommandos aus einer Eingabeeinrichtung. Diese Eingabeeinrichtung ist bei üblichen, von Hand gefahrenen Hebezeugen beispielsweise ein Handschalter oder Hängeschalter, wie er im Bereich der Hebezeugtechnik anzutreffen ist. Bei automatisch arbeitenden Anlagen kann die Eingabeeinrichtung aber auch ein fremder Prozessor sein, der seine Aufträge an die betreffende Schaltungsanordnung zur Steuerung des jeweiligen Hebezeugs abgibt.

Um zu verhindern, dass in die Eingänge des Mikroprozessors eingekoppelte Störimpulse oder sonstige interne Störungen den Mikroprozessor zu Fehlsteuerungen veranlassen, ist eine Störungsunterdrückungseinrichtung vorhanden. Diese Störungsunterdrückungseinrichtung weist für jede Steuerwicklung eines Motorschützes einen Ausgang sowie zwei Eingänge auf. Einer der Eingänge ist mit dem entsprechenden zugehörigen Ausgang des Mikroprozessors verbunden, während der andere Eingang an die betreffende Verbindung zwischen der Eingabeeinrichtung und dem jeweiligen Eingang des Mikroprozessors angeschlossen ist.

Damit das Hebezeug anlaufen kann, müssen bei dieser Einrichtung wenigstens zwei Signale mit gleicher Bedeutung vorhanden sein, andernfalls wird kein Fahrbefehl ausgelöst.

Eine weitere Verbesserung im Sinne einer noch besseren Störunterdrückung wird erreicht, wenn die Eingänge der Störungsunterdrückungseinrichtung Steuerleistungen erfordern, die deutlich höher sind als die Steuerleistung, die am Eingang des Mikroprozessors normalerweise benötigt wird, um ein Signal zu erzeugen. Die Höhe der erforderlichen Steuerleistung führt in der Regel zum Unterdrücken von Störimpulsen, wie sie von der offenen Steuerleitung eingefangen werden können.

Zweckmäßigerweise enthält die Störungsunterdrückungseinrichtung für jede Steuerwicklung eines Motorschützes oder Motorrelais wenigstens eine UND-Verknüpfungseinrichtung mit zwei Eingängen und einem Ausgang.

Diese UND-Verknüpfungseinrichtung kann von einer elektromechanischen Einrichtung, beispielsweise einem Hilfsrelais, oder einer rein elektronischen Einrichtung beispielsweise einem Transistor, gebildet sein. Beide Einrichtungen weisen eine gesteuerte und eine Steuerstrecke auf. Im Falle der Ausführung mit Relais ist die Steuerstrecke, die Magnet- oder Steuerwicklung des Relais und die gesteuerte Strecke ein Arbeitskontakt, während bei der rein elektronischen Ausführung ein bipolarer Transistor zur Anwendung kommen kann, dessen gesteuerte Strecke die Kollektor-Emitter-Strecke und dessen Steuerstrecke die Basis-Emitter-Strecke ist.

Die gesteuerte Strecke liegt mit einem Anschluss an der Steuerwicklung des betreffenden Motorschützes oder - relais, während der andere Anschluss mit der Eingabeeinrichtung verbunden ist. Die in der Regel empfindlichere Steuerstrecke liegt eingangsseitig an dem betreffenden Ausgang des Mikroprozessors.

Auch bei der neuen Schaltungsanordnung können Betriebszustände bzw. Fahrbefehle zum schnellen Heben und schnellen Senken gegeben werden. Diesen sind eigene Schütze zugeordnet, die in derselben Weise über die Störungsunterdrückungsanordnung angesteuert werden.

Im Übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 einen Seilzug in einer perspektivischen Darstellung, mit einer erfindungsgemäßen Steuerungsanordnung und
Fig. 2 ein Blockschaltbild der erfindungsgemäßen Steuerungsanordnung mit direktem Netzbetrieb des Motors des Seilzugs.

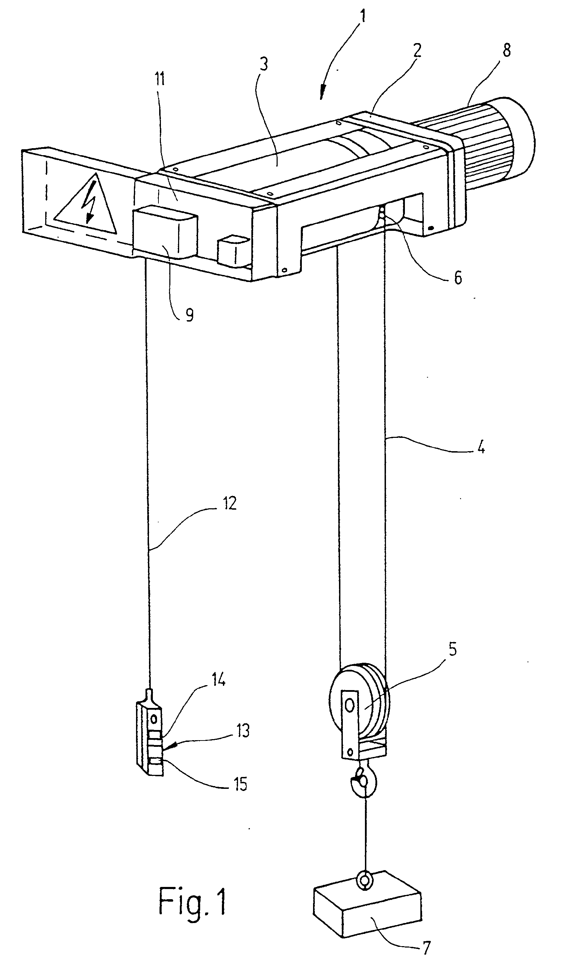

Fig. 1 zeigt in einer schematischen perspektivischen Darstellung einen Seilzug 1 mit einer in einem Rahmen 2 gelagerten Seiltrommel 3. Von der Seiltrommel 3 läuft ein Seil 4 ab, das zu einer Hakenflasche 5 und von dort zurück zu einer Verankerungsstelle 6 in dem Rahmen führt. An der Hakenflasche hängt eine Last 7.

Um die Seiltrommel 3 in Umdrehungen zu versetzen, ist an dem Rahmen 2 ein Elektromotor 8 angeflanscht, der vorzugsweise ein Drehstrommotor mit Kurzschlussläufer ist. Die Steuerung des Motors 8 geschieht über eine schematisch angedeutete Steuerungsanordnung 9, die in einem aufgeklappt gezeichneten Steuerkasten 11 untergebracht ist. An der Steuerungsanordnung 9 ist über ein Hängekabel 12 ein Handschalter oder Hängetaster 13 angeschlossen.

Der Hängetaster 13 weist zwei handbetätigte Drucktaster 14 und 15 auf, die dazu dienen, die Bewegung der Seiltrommel 3 zu steuern. Beispielsweise wird durch einfaches Niederdrücken des Drucktasters 14 bis zu einem Druckpunkt die Seiltrommel 3 im Sinne eines Anhebens der Last 7 mit einer langsamen Geschwindigkeit in Gang gesetzt. Wird der Drucktaster 14 über den Druckpunkt hinaus betätigt, erfolgt das Anheben der Last 7 mit einer erhöhten Geschwindigkeit.

In sinngemäßer Weise werden die Bewegungen zum Absenken mit Hilfe des Drucktasters 15 gesteuert.

Die Steuerungsanordnung 9 basiert auf einem Mikroprozessor 19, d.h. mit den Drucktastern 14 und 15 werden nicht unmittelbar Motorschütze gesteuert, sondern die von diesen Drucktastern 14, 15 kommenden Signale gelangen in einen Mikroprozessor, der seinerseits entsprechend Schalt- oder Motorschütze ansteuert.

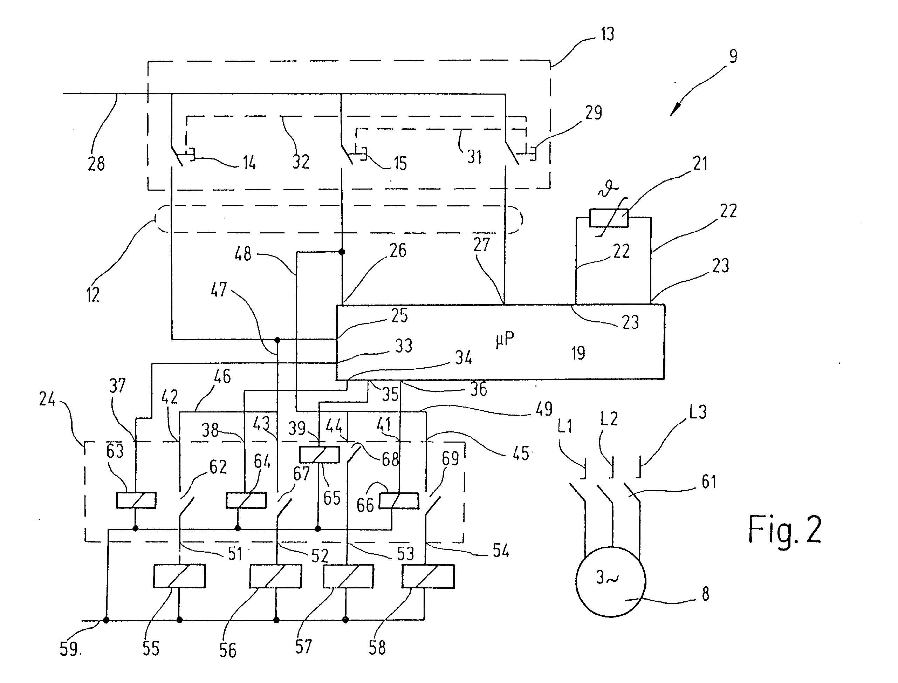

In Fig. 2 ist der erfindungswesentliche Teil der Steuerungsanordnung 9 stark schematisiert in einem Blockschaltbild gezeigt. Alle übrigen zum Verständnis der Erfindung nicht notwendigen Teile sind weggelassen.

Gemäß Fig. 2 enthält die Steuerungsanordnung 9 einen Mikroprozessor 19, der die gesamte Funktionsüberwachung des Hebezeugs 1 übernimmt einschließlich der Steuerung des Motors 8 um die Seiltrommel in Gang zu setzen sowie weiterer Funktionen wie Erfassung der Hakenlast, der Notabschaltung bei Überlast, der Überwachung der Wicklungstemperatur des Motors 8, der Betriebszeit und dgl.

Als Beispiel für eine der Funktionen, die von dem Mikroprozessor 19 sonst noch gesteuert oder überwacht werden, ist lediglich als Beispiel eine Wicklungstemperaturüberwachung gezeigt. Zu dieser gehört ein temperaturempfindlicher Widerstand 21, der in dem Motor 8 untergebracht ist und der über Anschlussleitungen 22 an Eingänge 23 des Mikroprozessors angeschlossen ist.

Damit keine zufällig in den Mikroprozessor 19 eingestreuten Signale oder Fehler des Mikroprozessors 19 Bewegungen des Hebezeugs 1 auslösen können, ist eine separate Störungsunterdrückungseinrichtung 24 vorhanden.

Zur Steuerung der Bewegung der Seiltrommel 3 weist der Mikroprozessor 19 drei Eingänge 25, 26 und 27 auf. An dem Eingang 25 liegt der Drucktaster 14 mit seinem Arbeitskontakt, dessen anderer Anschluss mit einer nicht weiter gezeigten Spannungsversorgung über eine Leitung 28 verbunden ist. Der Drucktaster 15 zum Steuern der Senkbewegung liegt mit seinem Arbeitskontakt zwischen der Verbindungsleitung 28 und dem Eingang 26. Ferner ist ein Tastschalter 29 vorhanden, dessen Arbeitskontakt betätigt wird, sobald einer der beiden Drucktaster 14 und 15 über den jeweiligen Druckpunkt hinaus eingedrückt wird. Hierdurch soll der Motor 8 mit der höheren Geschwindigkeit in Gang gesetzt werden. Dieser zusätzliche, hinter dem Druckpunkt wirksame Tastschalter 29 ist mit seinem Arbeitskontakt einends an die Verbindungsleitung 28 und anderenends an den Eingang 27 angeschlossen.

Die mechanische Kopplung zischen den beiden Drucktastern 14 und 15, die durch den Benutzer unmittelbar mechanisch zu betätigen sind, und dem der hohen Geschwindigkeit zugeordneten Tastschalter 29 ist durch gestrichelte Linien 31 und 32 symbolisiert. Der Tastschalter 29 liegt, bezogen auf die Bewegung der Drucktaster 14, 15, sozusagen hinter dem Druckpunkt, wie dies bei Hängeschaltern zur Steuerung von Hebezeugen üblich ist.

Mit Hilfe dieser insgesamt drei Schalter 14, 15, 29 sind insgesamt vier Betriebszustände des Hebezeugs 1 anzusteuern. Es handelt sich um die Betriebszustände "Heben", "Senken", "schnell Heben" und "schnell Senken". Ferner gibt es noch den Betriebszustand "Stillstand", in dem der Motor 8 angehalten ist und stillsteht. Dieser Betriebszustand wird erreicht, wenn keiner der beiden Drucktastenschalter 14 oder 15 betätigt ist. In diesem Zustand befindet sich gleichzeitig außerdem der Tastschalter 29 in der Ruhestellung.

Um den Motor 8 mit der vom Benutzer gewählten Drehrichtung und Geschwindigkeit einzuschalten, weist der.Mikroprozessor 19 insgesamt vier Ausgänge 33, 34, 35 und 36 auf. Jeder dieser Ausgänge 33...36 ist mit einem zugehörigen Eingang 37...41 der Störungsunterdrückungseinrichtung 24 verbunden.

Jedem der Eingänge 37...41 der Störungsunterdrückungseinrichtung 24 ist ein weiterer Eingang 42...45 zugeordnet. Der Eingang 42 ist über eine Leitung 46 zu dem Eingang 25 des Mikroprozessors 19 parallelgeschaltet und liegt somit unmittelbar auch an dem Arbeitskontakt des Drucktasters 14. Der Eingang 43 liegt über die Leitung 47 ebenfalls an dem Eingang 25 und somit auch an dem Drucktaster 14.

Der Eingang 44 ist über eine Leitung 48 an den Eingang 26 des Mikroprozessors 19 angeschlossen und damit auch an den Arbeitskontakt des Drucktasters 15. Schließlich ist der Eingang 45 über die Leitung 49 mit dem Eingang 26 verbunden.

Die Störungsunterdrückungseinrichtung 24 verfügt über insgesamt vier Signalausgänge 51, 52, 53 und 54, von denen jeder an eine zugehörige Steuerwicklung 55, 56, 57 und 58 eines Motorschützen oder -relais angeschlossen ist. Die anderen Enden der Steuerwicklungen 55 bis 58 liegen an einer gemeinsamen Schaltungsmasse 59.

Mit Hilfe dieser Steuerwicklungen 55-58 werden schematisch angedeutete Arbeitskontakte 61 der Motorschützen oder -relais betätigt, die in der Verbindungsleitung zwischen Drehstromnetzleitern L1...L3 und dem Motor 8 liegen. Mit Hilfe der Motorschütze, von denen lediglich deren Steuerwicklungen 55-58 gezeigt sind, werden die der Drehrichtung und Drehzahl entsprechenden Wicklungen des 3-phasigen Drehstrommotors 8 mit den Netzleitern L1, L2, L3 verbunden.

Die Störungsunterdrückungseinrichtung 24 enthält zwischen dem Signaleingang 42 und dem Signalausgang 51 eine gesteuerte Strecke und an dem Signaleingang 37 einen Anschluss einer Steuerstrecke. Da im gezeigten Ausführungsbeispiel die Störungsunterdrückungseinrichtung 24 elektromechanisch ausgeführt ist, enthält sie zu diesem Zweck jeweils ein Relais, wobei dessen Arbeitskontakt 62 die gesteuerte Strecke und die zugehörige Steuerwicklung 63 die gesteuerte Strecke darstellt. Von der Steuerwicklung 63 liegt ein Ende an dem Steuereingang 37, während das andere Ende mit der Schaltungsmasse 59 verbunden ist. In sinngemäß ähnlicher Weise liegen an den Eingängen 38, 39 und 41 jeweils als Steuerstrecke dienende Steuerwicklungen 64, 65 und 66, wobei die kalten Enden dieser Steuerwicklungen 64...66 mit der Schaltungsmasse 59, wie gezeigt, verbunden sind.

Jede dieser Steuerwicklungen 64...66 ist ein Arbeitskontakt 67, 68, 69 zugeordnet. Der Arbeitskontakt 67 liegt zwischen dem Steuereingang 43 und dem Ausgang 52, der Arbeitskontakt 68 zwischen dem Steuereingang 44 und dem Steuerausgang 53 und der Arbeitskontakt 69 zwischen dem Steuereingang 45 und dem Steuerausgang 54.

Die insoweit gezeigte Steuerschaltungsanordnung 9 arbeitet wie folgt:
Wenn keine der beiden Drucktaster 14 und 15 betätigt ist, befinden sich die zugehörigen Arbeitskontakte in der geöffneten Stellung. Außerdem ist auch der Drucktaster 29 nicht betätigt. Auch dessen Arbeitskontakt steht in der Offenstellung. Damit erhält der Mikroprozessor 19 an keinem seiner Eingänge 25, 26, 27 Spannung aus der Stromversorgungsleitung 28. Er interpretiert dies als Wunsch des Benutzers, den Motor 8 des Hebezeugs 1 nicht in Gang zu setzen, weshalb er keine Spannungssignale an seinen Ausgängen 33 bis 36 abgibt. Folglich ist keine der Steuerwicklungen 63, 64, 65, 66 mit Strom beaufschlagt. Die jeweils zugehörigen Arbeitskontakte 62, 67, 68 und 69 sind geöffnet und in der Folge sind auch die an die betreffenden Signalausgänge 51...54 angeschlossenen Steuerwicklungen 55 bis 58 spannungsfrei. Die zu diesen Steuerwicklungen gehörenden Arbeitskontakte 61 sind ebenfalls offen.
Wenn der Benutzer, ausgehend von dieser Betriebsstellung, beispielsweise den Drucktaster 14 bis zum Druckpunkt betätigt, weil er das Hebezeug 1 mit der normalen Geschwindigkeit heben lassen will, wird durch die Betätigung des Drucktasters 14 dessen Arbeitskontakt geschlossen. Hierdurch wird die Spannung auf der Versorgungsleitung 28 an den Eingang des Mikroprozessors 19 gelegt. Gleichzeitig bekommen auch die beiden Steuereingänge 42 und 43 der Störungsunterdrückungseinrichtung 24 Spannung aus der Versorgungsleitung 28, da diese Eingänge 42, 43 über die Leitungen 46 und 47 mit dem jetzt geschlossenen Arbeitskontakt des Drucktasters 14 verbunden sind.

Die an dem Eingang 25 anliegende Spannung der Stromversorgungsleitung 28 interpretiert der Mikroprozessor 19 als Wunsch des Benutzers, den Motor 8 im Sinne des Hebens mit normaler Drehzahl in Gang zu setzen. Dementsprechend erzeugt der Mikroprozessor 19 an seinem Ausgang 33 ein Spannungssignal, das in den Eingang 37 der Störungsunterdrückungseinrichtung 24 gelangt. Dieses Spannungssignal erzeugt einen Strom in der Steuerwicklung 63, wodurch der damit mechanisch gekoppelte Arbeitskontakt 62 in die Schließstellung überführt wird. Nunmehr besteht eine galvanische Verbindung zwischen dem Steuereingang 42 und dem Steuerausgang 51, und zwar nur an dieser gesteuerten Strecke, wodurch über die Leitung 46 die Steuerwicklung 55 über den Drucktaster 14 aus der Stromversorgungsleitung 28 Strom bekommt. Der zu der Steuerwicklung 55 gehörende Kontaktsatz des jeweiligen Motorschützes zieht an und legt die betreffende Wicklung des Motors 8 mit der gewünschten Reihenfolge der einzelnen Spulen an das Netz, wodurch der Motor 8 mit der normalen Drehzahl und der dem Heben entsprechenden Drehrichtung in Gang gesetzt wird.

Betätigt der Benutzer den Drucktaster 14 über den Druckpunkt hinaus, so wird dadurch auch der über die mechanische Kopplung 32 angekoppelte Drucktaster 29 zusätzlich geschlossen, weshalb der Mikroprozessor außerdem an seinem Eingang 27 das Spannungssignal aus der Stromversorgungsleitung 28 erhält. Er schaltet daraufhin den Ausgang 33 ab und statt dessen den Eingang 34 ein. Jetzt bekommt nicht mehr die Steuerwicklung 63, sondern die Steuerwicklung 64 Strom aus dem Mikroprozessor 19 und bewirkt ein Schließen des Arbeitskontaktes 67. Die gesteuerte Strecke 43-52 wird galvanisch durchgeschaltet und die Steuerwicklung 56 des zugehörigen Motorrelais bekommt Strom aus der Stromversorgungsleitung 28 über den Drucktaster 14. Die Steuerwicklung 56 lässt den zugeordneten Kontaktsatz schließen und die Wicklung des Motors 8 wird entsprechend der höheren Drehzahl mit der gewünschten Reihenfolge der einzelnen Wicklungsteile an das Netz geschaltet.

Für den Betrieb "Senken schnell" und "Senken langsam" gilt sinngemäß dieselbe Funktionsbeschreibung, lediglich mit dem Unterschied, dass nun anstelle des Drucktasters 14 der Drucktaster 15 beteiligt ist und beim langsamen Senken die Steuerwicklung 65 aus dem Mikroprozessor Strom bekommt, während zum Betriebszustand "Senken schnell" die Steuerwicklung 66, womit dementsprechend entweder der Arbeitskontakt 68 oder der Arbeitskontakt 69 geschlossen wird. Das Schließen eines der beiden Arbeitskontakte 68, 69 bedingt eine Stromversorgung der entsprechenden Steuerwicklung 57, 58 über die Leitung 48 und den in diesem Zustand geschlossenen Arbeitskontakt des Drucktasters 15.

Wie sich aus der Funktionsbeschreibung ergibt, bekommt eine Steuerwicklung 55...58 eines der Motorschütze nur dann Strom, wenn zwei Bedingungen gleichzeitig erfüllt sind. Gemäß der einen Bedingung muss der Mikroprozessor 19 an einem der entsprechenden Ausgänge ein Spannungssignal abgeben, das in der Lage ist, die an dem jeweiligen Ausgang liegende Steuerwicklung 63 oder 64 oder 65 oder 66 mit Strom zu beaufschlagen. Die zweite Bedingung besteht darin, dass gleichzeitig der zu der jeweiligen Steuerwicklung 63...66 gehörende Arbeitskontakt 62, 67, 68, 69 über den entsprechend geschlossenen Drucktaster 14 oder 15 Strom aus der Stromversorgungsleitung 28 erhält. Nur wenn beide Bedingungen gleichzeitig erfüllt sind, kann der Motor 8 anlaufen.

Sollte der Mikroprozessor 19 versagen, beispielsweise zufolge eines Programmierfehlers oder einer vorübergehenden Störung oder einer Beschädigung und zufolge dieser Störung an einem oder mehreren seiner Ausgänge 33...36 ständig ein Spannungssignal liefern, kann dennoch der Motor 8 zunächst nicht anlaufen. Zufolge der Störung mag zwar die jeweilige Steuerwicklung 63...66 mit Strom beaufschlagt und der zugehörige Arbeitskontakt 62, 67,68, 69 geschlossen werden, doch hat das Schließen dieses Arbeitskontaktes zunächst keine Wirkung, solange der Benutzer keinen der Drucktaster 14 und 15 betätigt. Ohne Betätigung dieser Drucktaster 14 oder 15 bekommt nämlich keine der Steuerwicklungen 55, 56, 57, 58 der Motorschütze Strom aus der Stromversorgungsleitung 28.

Das Gleiche gilt auch für den Fall, dass die Steuerleitungen 12 die Hängetaster 13 mit dem Mikroprozessor 19 verbinden, irgendwelche Störimpulse einfangen und an den betreffenden Eingang 25, 26, 27 des Mikroprozessors 19 weiterleiten. Da die Eingänge 25, 26, 27 des Mikroprozessors 19 hochohmig sind und folglich nur eine sehr geringe Steuerleistung erfordern, kann das Steuerkabel 12 mit seinen darin enthaltenen Leitungen für diese Eingänge wie eine Antenne wirken, insbesondere dann, wenn im Stillstand des Hebezeugs 1 die Arbeitskontakte der Drucktaster 14, 15 und 29 geöffnet sind.

Ersichtlicherweise wirkt jeweils eine Steuerwicklung 63...66 mit dem zugehörigen Arbeitskontakt 62, 67, 68, 69 als UND-Verknüfungseinrichtung und verknüpft ein Ausgangssignal des Mikroprozessors 19 mit einem Signal, das von einem der Drucktaster 14, 15 geliefert wird, zu einem Ausgangssignal, über das entsprechend eine Steuerwicklung 55...58 der Motorschütze gesteuert bzw. mit Strom beaufschlagt wird.

Anstelle einer elektromechanischen Ausführung besteht auch die Möglichkeit, eine rein elektronische Lösung für die Störungsunterdrückungseinrichtung 24 zu verwirklichen. Zu diesem Zweck wird jeweils ein Relais, bestehend aus einer Steuerwicklung und einem Arbeitskontakt, ersetzt, beispielsweise durch einen bipolaren Transistor, dessen Basis mit dem Steuereingang 37 verbunden wird, während die Kollektor-Emitter-Strecke zwischen dem Eingang 42 und dem Steuerausgang 51 liegt. Die anderen Stufen der Störungsunterdrückungseinrichtung 24 werden sinngemäß mit jeweils einem eigenen bipolaren Transistor bestückt. Die entsprechende Steuerwicklung 55...58 bekommt nur dann Strom aus der Stromversorgungsleitung 28, wenn über den jeweiligen Basisanschluss die entsprechende Kollektor-Emitter-Strecke leitend geschaltet ist.

Eine Steuerungsanordnung für den Motor eines Hebezeuges basiert auf einem Mikroprozessor. Um zu verhindern, dass Störsignale am Eingang des Mikroprozessors oder interne Schäden oder Programmierfehler zu unerwünschten Bewegungen des Motors führen, ist eine Störungsunterdrückungseinrichtung vorgesehen. Mit Hilfe der Störungsunterdrückungseinrichtung wird ein zur Motorbewegung erforderliches Ausgangssignal des Mikroprozessors mit einem entsprechenden Signal der Eingabeeinrichtung verknüpft. Der Motor wird nur dann in Gang gesetzt wird, wenn der Benutzer tatsächlich eine Fahrbewegung des Hebezeugs über die Eingabeeinrichtung abruft.

## Patentansprüche

1. Steuerungsanordnung (9) für ein einen Elektromotor (8) aufweisendes Hebezeug (1),
mit einer Eingabeeinrichtung (13), die dazu eingerichtet ist elektrische Signale abzugeben, die wenigstens drei Betriebszuständen wie "Heben", "Senken" und "Stillstand" entsprechen,
mit wenigstens einem Motorschütz oder -relais, das eine Steuerwicklung (55..58) aufweist und über das eine Stromversorgung (L1,L2,L3) an den Elektromotor (8) anschließbar ist, um den Elektromotor (8) in Übereinstimmung mit den Signalen der Eingabeeinrichtung (13) in Gang zu setzen,
mit einem Mikroprozessor (19), der wenigstens einen Eingangsanschluss (25,26,27), an die die Eingabeeinrichtung (13) angeschlossen ist, sowie wenigstens einen Ausgangsanschluss (33..36) zum Ausgeben von elektrischen Steuersignalen für die Steuerwicklung (55..58) des Motorschütz oder das Motorrelais aufweist, und
mit einer Störungsunterdrückungseinrichtung (24), die wenigstens einen Ausgang (51..58) für die wenigstens eine Steuerwicklung (55..58) des wenigstens einen Motorschütz oder Motorrelais aufweist, die wenigstens einen Eingang (42..49) für die von der Eingabeeinrichtung (13) kommenden Signale und wenigstens einen Eingang (37..41) für von dem Mikroprozessor (19) kommende Steuersignale aufweist und in der die Signale der Eingabeeinrichtung (13) mit den Steuersignalen des Mikroprozessors (19) miteinander verknüpft werden derart, dass eine Steuerwicklung (55..58) eines Motorschütz oder Motorrelais nur dann betätigt wird, wenn sowohl die Eingabeeinrichtung (13) als auch der Mikroprozessor (19) ein Signal für die betreffende Steuerwicklung (55..58) erzeugen, wobei der Strom für den wenigstens Motorschütz oder das wenigstens eine Motorrelais aus der Eingabeeinrichtung (13) geliefert wird.

2. Steuerungsanordnung nach Anspruch 1, **dadurch gekennzeichnet, dass** bei der Störungsunterdrückungseinrichtung (24) zumindest die Eingänge (42..45) für die Signale von der Eingabeeinrichtung (13) eine größere Steuerleistung erfordern als die an die Eingabeeinrichtung (13) angeschlossenen Eingänge (25,26,27) des Mikroprozessors (19).

3. Steuerungsanordnung nach Anspruch 1, **dadurch gekennzeichnet, dass** die Störungsunterdrückungseinrichtung (24) für jede Steuerwicklung (55..58) eines Motorschütz oder - relais wenigstens eine UND-Verknüpfungseinrichtung (63,62; 64,67;65,68;66,69) mit zwei Eingängen (37..41;42..45) und einem Ausgang (51..54) aufweist.

4. Steuerungsanordnung nach Anspruch 3, **dadurch gekennzeichnet, dass** die UND-Verknüpfungseinrichtung (63,62;64, 67;65,68;66,69) von einem Hilfsrelais mit einer Hilfsrelaissteuerwicklung (63..66) und einen Arbeitskontaktschalter (62,67,68,69) mit zwei Anschlüssen gebildet ist, wobei ein Anschluss der Hilfsrelaisteuerwicklung (63..66) einen Signaleingang (37..41) für das betreffende Steuersignal des Mikroprozessors (19), der eine Anschluss eines Arbeitskontaktschalters (62,67,68,69) einen Signaleingang (42..45) für das betreffende Signal der Eingabeeinrichtung (13) und der andere Anschluss des jeweiligen Arbeitskontaktschalters (62,67,68,69) den jeweiligen Signalausgang (51..54) bildet, der die Steuerwicklung (55..58) des jeweils zugehörigen Motorschütz oder Motorrelais beaufschlagt.

5. Steuerungsanordnung nach Anspruch 3, **dadurch gekennzeichnet, dass** die UND-Verknüpfungseinrichtung von einem elektronischen Bauelement mit einer Steuerstrecke und einer gesteuerten Strecke mit zwei Anschlüssen gebildet ist, wobei ein Anschluss der Steuerstrecke einen Signaleingang für das betreffende Steuersignal des Mikroprozessors (19), der eine Anschluss der gesteuerten Strecke einen Signaleingang für das betreffende Signal der Eingabeeinrichtung (13) und der andere Anschluss der gesteuerten Strecke den jeweiligen Signalausgang bildet, der die Steuerwicklung (55..58) des jeweils zugehörigen Motorschütz oder Motorrelais beaufschlagt.

6. Steuerungsanordnung nach Anspruch 1, **dadurch gekennzeichnet, dass** die Störungsunterdrückungseinrichtung (24) von dem Mikroprozessor (19) getrennt ist.

7. Steuerungsanordnung nach Anspruch 1, **dadurch gekennzeichnet, dass** die Eingabeeinrichtung (13) dazu eingerichtet ist Signale abzugeben, die wenigstens zwei weiteren Betriebszuständen wie "schnell Heben" und "schnell Senken" entsprechen.

8. Steuerungsanordnung nach Anspruch 1, **dadurch gekennzeichnet, dass** die Eingabeeinrichtung (13) elektromechanische oder elektronische Schalteinrichtungen (14,15,28) enthält.

9. Steuerungsanordnung nach Anspruch 1, **dadurch gekennzeichnet, dass** jede elektromechanische oder elektronische Schalteinrichtung (14,15,28) einem Betriebszustand mit Ausnahmen des Betriebszustands "Stillstand" zugeordnet ist.

10. Steuerungsanordnung nach Anspruch 1, **dadurch gekennzeichnet, dass** die Eingabeeinrichtung von einem Handsteuerschalter (13) gebildet ist.

11. Steuerungsanordnung nach Anspruch 1, **dadurch gekennzeichnet, dass** für jeden Betriebszustand mit Ausnahmen des Betriebszustands "Stillstand" ein eigener Motorschütz oder ein eigenes Motorrelais (45..48) vorgesehen ist.

12. Steuerungsanordnung nach Anspruch 1, **dadurch gekennzeichnet, dass** der Elektromotor (8) in allen Betriebszuständen mit Ausnahme des Betriebszustands "Stillstand" über einen Frequenzumrichter (63) mit Strom versorgt wird.

13. Steuerungsanordnung nach Anspruch 1, **dadurch gekennzeichnet, dass** der Mikroprozessor (19) für die Betriebszustände "Heben", "Senken" und "schnell" je einen Eingangsanschluss (24,25,26) aufweist.

## Claims

1. Control arrangement (9) for a hoist (1) having an electric motor (8), with an input device (13), which is arranged to emit electrical signals, which correspond to at least three operating states such as "raising", "lowering" and "stoppage",
with at least one motor contactor or relay, which has a control winding (55...58) and by means of which a current supply (L1, L2, L3) can be connected to the electric motor (8) to set the electric motor (8) in operation in conformity with the signals of the input device (13),
with a microprocessor (19), which has at least one input connection (25, 26, 27), to which the input device (13) is connected, and also at least one output connection (33...36) to output electrical control signals for the control winding (55...58) of the motor contactor or motor relay, and
with an interference suppressor means (24), which has at least one output (51...58) for the at least one control winding (55...58) of the at least one motor contactor or motor relay, which has at least one input (42...49) for the signals coming from the input device (13) and at least one input (37...41) for control signals coming from the microprocessor (19) and in which the signals of the input device (13) are linked together with the control signals of the microprocessor (19) in such a manner that a control winding (55...58) of a motor contactor or motor relay is only actuated when both the input device (13) and the microprocessor (19) generate a signal for the respective control winding (55...58), wherein the current for the at least one motor contactor or the at least one motor relay is supplied from the input device (13).

2. Control arrangement according to claim 1, **characterised in that** in the case of the interference suppressor means (24) at least the inputs (42...45) for the signals of the input device (13) require a higher driving power than the inputs (25, 26, 27) of the microprocessor (19) connected to the input device (13).

3. Control arrangement according to claim 1, **characterised in that** the interference suppressor means (24) has at least one AND function means (63, 62; 64, 67; 65, 68; 66, 69) with two inputs (37...41; 42...45) and one output (51...54) for each control winding (55...58) of a motor contactor or motor relay.

4. Control arrangement according to claim 3, **characterised in that** the AND function means (63, 62; 64, 67; 65, 68; 66, 69) is formed from an auxiliary relay with an auxiliary relay control winding (63...66) and an operating contact switch (62, 67, 68, 69) with two connections, wherein a connection of the auxiliary relay control winding (63...66) forms a signal input (37...41) for the respective control signal of the microprocessor (19), one connection of an operating contact switch (62, 67, 68, 69) forms a signal input (42...45) for the respective signal of the input device (13) and the other connection of the respective operating contact switch (62, 67, 68, 69) forms the respective signal output (51...54), which acts on the control winding (55...58) of the respectively associated motor contactor or motor relay.

5. Control arrangement according to claim 3, **characterised in that** the AND function means is formed by an electronic component with a control section and a controlled section with two connections, wherein a connection of the control section forms a signal input for the respective control signal of the microprocessor (19), one connection of the controlled section forms a signal input for the respective signal of the input device (13) and the other connection of the controlled section forms the respective signal output, which acts on the control winding (55...58) of the respectively associated motor contactor or motor relay.

6. Control arrangement according to claim 1, **characterised in that** the interference suppressor means (24) is separate from the microprocessor (19).

7. Control arrangement according to claim 1, **characterised in that** the input device (13) is arranged to emit signals, which correspond to at least two further operating states such as "quick raising" and "quick lowering".

8. Control arrangement according to claim 1, **characterised in that** the input device (13) contains electromechanical or electronic switching devices (14, 15,28).

9. Control arrangement according to claim 1, **characterised in that** each electromechanical or electronic switching device (14, 15, 28) is associated with an operating state with the exception of the operating state "stoppage".

10. Control arrangement according to claim 1, **characterised in that** the input device is formed by a manual control switch (13).

11. Control arrangement according to claim 1, **characterised in that** each operating state with the exception of the operating state "stoppage" is provided with its own motor contactor or its own motor relay (45...48).

12. Control arrangement according to claim 1, **characterised in that** the electric motor (8) is supplied with current by means of a frequency converter (63) in all operating states with the exception of the operating state "stoppage".

13. Control arrangement according to claim 1, **characterised in that** the microprocessor (19) has a respective input connection (24, 25, 26) for the operating states "raising", "lowering" and "quick".

## Revendications

1. Dispositif de commande (9) pour un appareil de levage (1) présentant un moteur électrique (8), qui comprend :
- un dispositif d'entrée (13) conçu pour délivrer des signaux électriques correspondant à au moins trois états de fonctionnement « monter », « descendre », « arrêt »,
- au moins une protection de moteur ou un relais de moteur qui présente un enroulement de commande (55.. 58) et qui peut relier une alimentation en courant (L1, L2, L3) ou moteur électrique (8) afin de faire fonctionner celui-ci en correspondance avec les signaux de l'unité d'entrée (13),
- un microprocesseur (19) présentant au moins un raccord d'entrée (25, 26, 27) auquel est relié le dispositif d'entrée (13) ainsi qu'au moins un raccord de sortie (33...36) pour délivrer des signaux électriques de commande, à destination de l'enroulement de commande (55.. 58) de la protection de moteur ou du relais de moteur,
- un dispositif anti-défaillance (24), présentant au moins une sortie (51.. 58) pour l'enroulement de commande (55.. 58), au nombre d'un au moins, de la protection de moteur ou du relais de moteur au nombre d'un au moins, ainsi qu'au moins une entrée (42.. 49) pour les signaux provenant du dispositif d'entrée (13) et au moins une entrée (37.. 41) pour des signaux de commande provenant du microprocesseur (19), et dans ce dispositif les signaux du dispositif d'entrée (13) et les signaux de commande du microprocesseur (19) sont connectés entre eux de manière qu'un enroulement de commande (55.. 58) d'une protection de moteur ou d'un relais de moteur n'est activé que si à la fois le dispositif d'entrée (13) et le microprocesseur (19) produisent un signal à destination de l'enroulement de commande (55.. 58) concerné, faisant que le courant est délivré par le dispositif d'entrée (13) à la protection de moteur au nombre d'une au moins ou au relais de moteur au nombre d'un au moins.

2. Dispositif de commande selon la revendication 1, **caractérisé en ce que** dans le dispositif anti-défaillance (24) au moins les entrées (42.. 45) pour les signaux provenant du dispositif d'entrée (13) demandent une plus grande puissance de commande que les entrées (25, 26, 27) du microprocesseur qui sont reliées au dispositif d'entrée.

3. Dispositif de commande selon la revendication 1, **caractérisé en ce que** le dispositif anti-défaillance (24) présente, pour chaque enroulement de commande (55... 58) d'une protection de moteur ou d'un relais de moteur, un dispositif de connexion ET (63, 62 ; 64, 67 ; 65, 68 ; 66, 69) avec deux entrées (37.. 41 ; 42.. 45) et une sortie (51.. 54).

4. Dispositif de commande selon la revendication 3, **caractérisé en ce que** le dispositif de connexion ET (63, 62 ; 64, 67 ; 65, 68 ; 66, 69) est constitué par un relais auxiliaire avec un enroulement de commande (63.. 66) et par un contacteur de travail (62, 67, 68, 69) avec deux raccords, un raccord de l'enroulement de commande (63.. 66) formant l'entrée de signal (37.. 41) pour le signal de commande concerné du microprocesseur (19) et un raccord du contacteur de travail (62, 67, 68, 69) constituant une entrée de signal (42.. 45) pour le signal concerné du dispositif d'entrée, tandis que l'autre raccord de ce contacteur de travail (62, 67, 68, 69) constitue la sortie de signal (51.. 54) pour le signal qui actionne l'enroulement de commande (55.. 58) de la protection de moteur ou du relais de moteur concerné .

5. Dispositif de commande selon la revendication 3, **caractérisé en ce que** le dispositif de connexion ET est constitué par un composant électronique comportant une section de commande et une section commandée avec deux raccords, un raccord de la section de commande formant une entrée de signal pour le signal de commande concerné du microprocesseur (19), et un raccord de la section commandée formant une entrée de signal pour le signal concerné du dispositif d'entrée (13) tandis que l'autre raccord de la section commandée forme la sortie pour le signal qui actionne l'enroulement de commande (55.. 58) de la protection de moteur ou du relais de moteur correspondant

6. Dispositif de commande selon la revendication 1, **caractérisé en ce que** le dispositif anti-défaillance (24) est séparé du microprocesseur.

7. Dispositif de commande selon la revendication 1, **caractérisé en ce que** le dispositif d'entrée (13) est conçu pour délivrer des signaux qui correspondent à au moins deux autres états de fonctionnement, tels que « monter rapidement » ou « descendre rapidement ».

8. Dispositif de commande selon la revendication 1, **caractérisé en ce que** le dispositif d'entrée (13) contient des dispositifs de commutation (14, 15, 18) électromécaniques ou électroniques.

9. Dispositif de commande selon la revendication 1, **caractérisé en ce que** chaque dispositif de commutation (14, 15, 28) électromécanique ou électronique est affecté à un état de fonctionnement autre que l'état « arrêt ».

10. Dispositif de commande selon la revendication 1, **caractérisé en ce que** le dispositif d'entrée est constitué par un commutateur (13) commandé à la main.

11. Dispositif de commande selon la revendication 1, **caractérisé en ce que** pour chaque état de fonctionnement autre que l'état « arrêt », il est prévu une protection ou un relais de moteur propre (45.. 48).

12. Dispositif de commande selon la revendication 1, **caractérisé en ce que** le moteur électrique (8), dans tous les états de fonctionnement autres que l'état « arrêt », est alimenté en courant par l'intermédiaire d'un convertisseur de fréquence (63).

13. Dispositif de commande selon la revendication 1, **caractérisé en ce que** le microprocesseur (19) présente un raccord d'entrée (24, 25, 26) pour chacun des états de fonctionnement « monter », « descendre », « arrêt ».
